# EUROPÄISCHE PATENTSCHRIFT

(11) **EP 2 898 023 B1**
(45) Veröffentlichungstag und Bekanntmachung des Hinweises auf die Patenterteilung: **09.11.2016**
(21) Anmeldenummer: 13765738.3
(22) Anmeldetag: 20.09.2013
(51) Int. Cl.: C09D 4/06, C09D 175/00

(54) **VERFAHREN ZUR HERSTELLUNG UND AUSBESSERUNG EINER FARB- UND/ODER EFFEKTGEBENDEN MEHRSCHICHTIGEN LACKIERUNG**
METHOD FOR PRODUCING AND REPAIRING A MULTI-COAT COLOUR AND/OR EFFECT PAINT SYSTEM
PROCÉDÉ DE PRODUCTION ET DE RETOUCHE D'UNE PEINTURE MULTICOUCHE DE COULEUR ET/OU À EFFETS

(30) Priorität: 21.09.2012 EP 12185471; 21.09.2012 US 201261703800 P
(43) Veröffentlichungstag der Anmeldung: 29.07.2015
(73) Patentinhaber: BASF Coatings GmbH, 48165 Münster (DE)
(72) Erfinder: STEINMETZ, Bernhard, 97535 Rütschenhausen (DE); FIEBER, Philipp, 97250 Erlabrunn (DE)
(86) Internationale Anmeldenummer: PCT/EP2013/069606
(87) Internationale Veröffentlichungsnummer: WO 2014/044811

(56) Entgegenhaltungen:
- DE-C1- 10 043 405
- US-A- 5 792 806
- US-B1- 6 583 214

## Beschreibung

Die Erfindung betrifft ein Verfahren zur Herstellung einer farb- und/oder effektgebenden mehrschichtigen Lackierung, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird.
Die Erfindung betrifft weiterhin eine farb- und/oder effektgebende mehrschichtige Lackierung, welche durch das oben bezeichnete Verfahren herstellbar ist, sowie ein Verfahren zum Ausbessern von Fehlstellen auf der besagten farb- und/oder effektgebenden mehrschichtigen Lackierung, bei dem
(1) ein pigmentierter wässriger Basislack auf die Fehlstelle aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird.

Die Erfindung betrifft außerdem pigmentierte wässrige Basislacke, die zur Herstellung von farb- und/oder effektgebenden mehrschichtigen Lackierungen geeignet sind sowie die Verwendung von Phosphinoxiden in pigmentierten wässrigen Basislacken.

Das oben beschriebene Verfahren ist bekannt (vgl. z.B. die deutsche Patentanmeldung DE 199 48 004 A1, Seite 17, Zeile 37, bis Seite 19, Zeile 22, oder das deutsche Patent DE 100 43 405 C1, Spalte 3, Absatz [0018], und Spalte 8, Absatz [0052], bis Spalte 9, Absatz [0057], in Verbindung mit Spalte 6, Absatz [0039], bis Spalte 8, Absatz [0050]) und wird beispielsweise in großem Umfang sowohl für die Erstlackierung (OEM) als auch für die Reparaturlackierung von Automobilkarossen eingesetzt.

US5792806 beschreibt ein Zusammensetzung zur Beschichtigung enthaltend Acrylat- und Urethan-Emulsion, ein Vernetzungsmittel und Phosphate oder Phosphite Ester.

Mit dem in Rede stehenden so genannten basecoat/clearcoat-Verfahren werden im Nass-in-nass-Verfahren farb- und/oder effektgebende mehrschichtige Lackierungen erhalten. Insbesondere bei der Automobilserienlackierung können Fehler in der resultierenden Lackierung auftreten. Sind Fehler auf dieser - der so genannten Originallackierung - zu erkennen, so wird die Originallackierung ausgebessert, d.h. repariert. Weist die Originallackierung beispielsweise großflächig Fehlstellen auf, so wird die gesamte Karosse oder zumindest ein entsprechender Teil repariert, also ein zweites Mal lackiert. Sind nur kleine Fehlstellen auszubessern, so wird nicht die ganze Karosse, sondern nur der sogenannte "Spot" repariert. Dieser Prozeß wird "Spot Repair" genannt. Es ist von entscheidender Bedeutung, dass die zur Reparatur an den Fehlstellen aufgetragene Lackierung hervorragend haftet. Die entsprechende Lackierung muss zum Beispiel gegenüber einer Dampfstrahlbelastung stabil sein. Das heißt, eine Dampfstrahlbelastung darf keinerlei Haftungsverlust verursachen. Die der vorliegenden Erfindung zugrunde liegende Aufgabenstellung besteht somit in der Bereitstellung eines Verfahrens der oben beschrieben Art mit dem farb- und/oder effektgebende mehrschichtige Lackierungen erhältlich sind, die gegenüber den Lackierungen des Standes der Technik eine verbesserte Eignung des Lacks für die Reparaturlackierung aufweisen. Ebenso soll ein Verfahren zur Verfügung gestellt werden, mit dem Fehlstellen auf den oben bezeichneten farb- und/oder effektgebenden mehrschichtigen Lackierungen ausgebessert werden können. Unter einer verbesserten Eignung des Lacks für die Reparaturlackierung ist zu verstehen, dass an den ausgebesserten Stellen die dort zur Reparatur aufgebrachte Lackierung hervorragend haftet. Insbesondere soll sie gegenüber einer Dampfstrahlbelastung stabil sein.

Diese Aufgabe wird überraschenderweise dadurch gelöst, dass in Stufe (1) des oben bezeichneten Verfahrens zur Herstellung einer farb- und/oder effektgebenden mehrschichtigen Lackierung ein pigmentierter wässriger Basislack eingesetzt wird, der mindestens ein Phosphinoxid der folgenden Strukturformel (I) enthält: 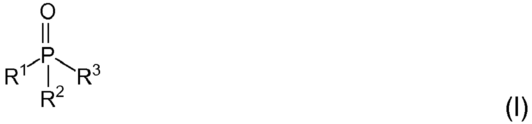 wobei die Reste R¹ bis R³ ausgewählt sind aus der Gruppe der aliphatischen oder aromatischen Kohlenwasserstoffe und zudem die Summe über die gewichtsprozentualen Anteile aller Phosphinoxide gemäß Strukturformel (I) 0,1 bis 5 Gew.-% bezogen auf das Gesamtgewicht des in Stufe (1) aufgetragenen wässrigen Basislacks beträgt.

Die Erfindung betrifft auch die oben beschriebenen, in Stufe (1) des basecoat/clearcoat-Verfahrens einsetzbaren pigmentierten wässrigen Lacke.

In Stufe (1) des erfindungsgemäßen Verfahrens können im Prinzip alle bekannten wässrigen Basislacke eingesetzt werden, wenn sie wenigstens eines der oben definierten Phosphinoxide enthalten und die Summe über die gewichtsprozentualen Anteile aller Phosphinoxide gemäß Strukturformel (I) 0,1 bis 5 Gew.-% bezogen auf das Gesamtgewicht des in Stufe (1) aufgetragenen wässrigen Basislacks beträgt. Basislacke werden dann als "wässrig" bezeichnet, wenn sie 30 bis 70 Gew.-% Wasser, bezogen auf das Gesamtgewicht des Basislacks enthalten. Die Begriffe "wässriger Basislack" und "Wasserbasislack" werden in dieser Anmeldung als gleichbedeutende Begriffe verwendet.

Die erfindungsgemäß eingesetzten Basislacke enthalten farb- und/oder effektgebende Pigmente. Solche Farbpigmente und Effektpigmente sind dem Fachmann bekannt und werden beispielsweise in Römpp-Lexikon Lacke und Druckfarben, Georg Thieme Verlag, Stuttgart, New York, 1998, Seite 176 und 451, beschrieben. Der Anteil der Pigmente kann beispielsweise im Bereich von 1 bis 40 Gew.-%, bevorzugt 2 bis 20 Gew.-%, besonders bevorzugt 5 bis 15 Gew.-%, bezogen auf das Gesamtgewicht des pigmentierten wässrigen Basislacks, liegen.

Im erfindungsgemäßen Verfahren werden bevorzugt Basislacke eingesetzt, die als Bindemittel physikalisch, thermisch oder thermisch und mit aktinischer Strahlung härtbare Bindemittel enthalten.

Der Begriff "(Meth)Acrylat" soll im Folgenden sowohl Acrylat als auch Methacrylat bezeichnen. D.h. ein entsprechendes Polymer ist daher sowohl aus Acrylaten als auch Methacrylaten aufgebaut. Es kann aber ebenso ausschließlich aus Acrylaten oder ausschließlich aus Methacrylaten aufgebaut sein.

Besonders bevorzugt ist als Bindemittel mindestens ein gesättigtes oder ungesättigtes Polyurethanharz enthalten. Derartige Polyurethanharz enthaltende Lacke können ebenfalls üblicherweise physikalisch, thermisch oder thermisch und mit aktinischer Strahlung gehärtet werden.

Im Rahmen der vorliegenden Erfindung bedeutet der Begriff "physikalische Härtung" die Bildung eines Films durch Abgabe von Lösemittel aus Polymerlösungen oder Polymerdispersionen. Üblicherweise sind hierfür keine Vernetzungsmittel notwendig.

Im Rahmen der vorliegenden Erfindung bedeutet der Begriff "thermische Härtung" die durch Hitze initiierte Vernetzung einer Lackschicht, bei der in dem zugrunde liegenden Lack entweder ein separat vorliegendes Vernetzungsmittel oder aber selbstvernetzende Bindemittel angewandt werden. Das Vernetzungsmittel enthält reaktive funktionelle Gruppen, die zu den in den Bindemitteln vorhandenen reaktiven funktionellen Gruppen komplementär sind. Üblicherweise wird dies von der Fachwelt als Fremdvernetzung bezeichnet. Sind die komplementären reaktiven funktionellen Gruppen oder autoreaktiven funktionellen Gruppen, d.h. Gruppen, die mit Gruppen derselben Art reagieren, bereits in den Bindemittelmolekülen vorhanden, liegen selbstvernetzende Bindemittel vor. Beispiele geeigneter komplementärer reaktiver funktioneller Gruppen und autoreaktiver funktioneller Gruppen sind aus der deutschen Patentanmeldung DE 199 30 665 A1, Seite 7, Zeile 28 bis Seite 9, Zeile 24 bekannt.

Im Rahmen der vorliegenden Erfindung ist unter aktinischer Strahlung elektromagnetische Strahlung wie nahes Infrarot (NIR), UV-Strahlung, insbesondere

UV-Strahlung, und Korpuskularstrahlung wie Elektronenstrahlung zu verstehen. Die Härtung durch UV-Strahlung wird üblicherweise durch radikalische oder kationische Photoinitiatoren initiiert.

Werden die thermische Härtung und die Härtung mit aktinischem Licht gemeinsam angewandt, spricht man auch von "Dual Cure".

In der vorliegenden Erfindung sind Basislacke bevorzugt, die thermisch oder thermisch und mit aktinischer Strahlung, also mittels "Dual Cure", härtbar sind. Insbesondere sind solche Basislacke bevorzugt, die als Bindemittel ein Polyurethanharz und als Vernetzungsmittel ein Aminoplastharz oder ein blockiertes oder unblockiertes Polyisocyanat, bevorzugt ein Aminoplasthatz, enthalten. Unter den Aminoplastharzen sind insbesondere Melaminharze bevorzugt.

Das bevorzugt enthaltene Polyurethanharz kann ionisch und/oder nicht ionisch hydrophil stabilisiert sein. In bevorzugten Ausführungsformen der vorliegenden Erfindung ist das Polyurethanharz ionisch hydrophil stabilisiert. Die bevorzugten Polyurethanharze sind linear oder enthalten Verzweigungen. Besonders bevorzugt handelt es sich um ein mit olefinisch ungesättigten Monomeren verbundenes Polyurethanharz. Vorzugsweise werden als olefinisch ungesättigte Monomere Acrylat- und/oder Methacrylatgruppen-haltige Monomere an das Polyurethanharz (A) gebunden, wodurch Polyurethan(meth)acrylate entstehen. Ganz besonders bevorzugt ist das Polyurethanharz ein Polyurethan(meth)acrylat. Das bevorzugt enthaltene Polyurethanharz ist physikalisch, thermisch oder thermisch und mit aktinischer Strahlung härtbar. Insbesondere ist es thermisch oder thermisch und mit aktinischer Strahlung härtbar. Besonders bevorzugt umfasst das Polyurethanharz reaktive funktionelle Gruppen, durch die eine Fremdvernetzung möglich ist.

Geeignete gesättigte oder ungesättigte Polyurethanharze werden beispielsweise beschrieben in
- der deutschen Patentanmeldung DE 199 14 896 A1, Spalte 1, Zeilen 29 bis 49 und Spalte 4, Zeile 23 bis Spalte 11, Zeile 5,
- der deutschen Patentanmeldung DE 199 48 004 A1, Seite 4, Zeile 19 bis Seite 13, Zeile 48,
- der europäischen Patentanmeldung EP 0 228 003 A1, Seite 3, Zeile 24 bis Seite 5, Zeile 40,
- der europäischen Patentanmeldung EP 0 634 431 A1, Seite 3, Zeile 38 bis Seite 8, Zeile 9, oder
- der internationalen Patentanmeldung WO 92/15405, Seite 2, Zeile 35 bis Seite 10, Zeile 32.

Für die Herstellung des Polyurethanharzes werden vorzugsweise die dem Fachmann bekannten aliphatischen, cycloaliphatischen, aliphatisch-cycloaliphatischen, aromatischen, aliphatisch-aromatischen und/oder cycloaliphatisch-aromatischen Polyisocyanate eingesetzt.

Als Alkohol-Komponente für die Herstellung der Polyurethanharze werden bevorzugt die dem Fachmann bekannten, gesättigten und ungesättigten höhermolekularen und niedermolekularen Polyole sowie gegebenenfalls auch Monoalkohole in untergeordneten Mengen eingesetzt. Als niedermolekulare Polyole werden insbesondere Diole und in untergeordneten Mengen Triole zur Einführung von Verzweigungen eingesetzt. Beispiele geeigneter höhermolekularer Polyole sind gesättigte oder olefinisch ungesättigte Polyesterpolyole und/oder Polyetherpolyole. Insbesondere werden als höhermolekulare Polyole Polyesterpolyole, insbesondere solche mit einem zahlenmittleren Molekulargewicht von 400 bis 5000 g/mol (gemessen mittels Gelpermeationschromatographie gegen einen Polystyrolstandard), eingesetzt.

Zur hydrophilen Stabilisierung beziehungsweise zur Erhöhung der Dispergierbarkeit in wässrigem Medium kann das bevorzugt enthaltene Polyurethanharz bestimmte ionische Gruppen und/oder Gruppen, die in ionische Gruppen überführt werden können (potentiell ionische Gruppen), enthalten. Solche Polyurethanharze werden im Rahmen der vorliegenden Erfindung als ionisch hydrophil stabilisierte Polyurethanharze bezeichnet. Ebenfalls enthalten sein können nicht ionische hydrophil modifizierende Gruppen. Bevorzugt sind aber die ionisch hydrophil stabilisierten Polyurethane. Genauer handelt es sich bei den modifizierenden Gruppen entweder um
- funktionelle Gruppen, die durch Neutralisationsmittel und/oder Quaternisierungsmittel in Kationen überführt werden können, und/oder kationische Gruppen (kationische Modifizierung)
   oder
- funktionelle Gruppen, die durch Neutralisationsmittel in Anionen überführt
   werden können, und/oder anionische Gruppen (anionische Modifizierung) und/oder
- nicht ionische hydrophile Gruppen (nicht-ionische Modifizierung).

Wie der Fachmann weiß, handelt es sich bei den funktionellen Gruppen zur kationischen Modifizierung um beispielsweise primäre, sekundäre und/oder tertiäre Aminogruppen, sekundäre Sulfidgruppen und/oder tertiäre Phosphingruppen, insbesondere tertiäre Aminogruppen und sekundäre Sulfidgruppen (funktionelle Gruppen, die durch Neutralisationsmittel und/oder Quaternisierungsmittel in kationische Gruppen überführt werden können). Weiterhin zu nennen sind die aus den vorgenannten funktionellen Gruppen unter Einsatz von dem Fachmann bekannten Neutralisationsmitteln und/oder Quaternisierungsmitteln hergestellte kationische Gruppen wie primäre, sekundäre, tertiäre und/oder quaternäre Ammoniumgruppen, tertiäre Sulfoniumgruppen und/oder quaternäre Phosphoniumgruppen, insbesondere quaternäre Ammoniumgruppen und tertiäre Sulfoniumgruppen.

Bei den funktionellen Gruppen zur anionischen Modifizierung handelt es sich bekanntermaßen um beispielsweise Carbonsäure-, Sulfonsäure- und/oder Phosphonsäuregruppen, insbesondere Carbonsäuregruppen (funktionelle Gruppen, die durch Neutralisationsmittel in anionische Gruppen überführt werden können) sowie aus den vorgenannten funktionellen Gruppen unter Einsatz von dem Fachmann bekannten Neutralisationsmittel hergestellte anionische Gruppen wie Carboxylat-, Sulfonat- und/oder Phosphonatgruppen.

Bei den funktionellen Gruppen zur nicht-ionischen hydrophilen Modifizierung handelt es sich vorzugsweise um Poly(oxyalkylen)-Gruppen, insbesondere Poly(oxyethylen)-Gruppen.

Die ionisch hydrophilen Modifizierungen können durch Monomere, welche die (potentiell) ionischen Gruppen enthalten, in das Polyurethanharz eingeführt werden. Die nicht-ionischen Modifizierungen werden beispielsweise durch den Einbau von Poly(ethylen)oxid-Polymeren als laterale oder endständige Gruppen der Polyurethanmoleküle eingeführt. Die hydrophilen Modifizierungen werden beispielsweise über Verbindungen eingeführt, die mindestens eine gegenüber Isocyanatgruppen reaktive Gruppe, vorzugsweise mindestens eine Hydroxygruppe, enthalten. Zur Einführung der ionischen Modifizierung können Monomere eingesetzt werden, die neben den modifizierenden Gruppen mindestens eine Hydroxygruppe enthalten. Zur Einführung der nicht-ionischen Modifizierungen werden bevorzugt die dem Fachmann bekannten Polyetherdiole und/oder Alkoxypoly(oxyalkylen)alkohole eingesetzt.

Vorzugsweise kann es sich bei dem Polyurethanharz um ein Pfropfpolymer handeln. Insbesondere handelt es sich um ein mittels olefinisch ungesättigten Verbindungen, vorzugsweise olefinisch ungesättigten Monomeren, gepfropftes Polyurethanharz. In diesem Fall ist das Polyurethan also beispielsweise mit Seitengruppen und/oder Seitenketten gepfropft, die auf olefinisch ungesättigten Monomeren basieren. Insbesondere handelt es sich um Seitenketten, die auf Poly(meth)acrylaten basieren. Als Poly(meth)acrylate werden im Rahmen der vorliegenden Erfindung Polymere beziehungsweise polymere Reste bezeichnet, die Acrylat- und/oder Methacrylatgruppen-haltige Monomere umfassen, vorzugsweise aus Acrylat- und/oder Methacrylatgruppen-haltigen Monomeren bestehen. Unter Seitenketten, die auf Poly(meth)acrylaten basieren, sind Seitenketten zu verstehen, die bei der Pfropfpolymerisation unter Einsatz von (Meth)acrylatgruppen-haltigen Monomeren aufgebaut werden. Dabei werden bei der Pfropfpolymerisation vorzugsweise mehr als 50 mol-%, insbesondere mehr als 75 mol-%, insbesondere 100 mol.-%, bezogen auf die Gesamtmenge der bei der Pfropfpolymerisation eingesetzten Monomere, an (Meth)acrylatgruppen-haltigen Monomeren eingesetzt.

Die beschriebenen Seitenketten werden bevorzugt nach der Herstellung einer Polyurethanharz-Primärdispersion in das Polymer eingeführt. In diesem Fall kann das in der Primärdispersion vorliegende Polyurethanharz seiten- und/oder endständige olefinisch ungesättigte Gruppen enthalten, über die dann die Pfropfpolymerisation mit den olefinisch ungesättigten Verbindungen verläuft. Das zu pfropfende Polyurethanharz kann also ein ungesättigtes Polyurethanharz (A) sein. Bei der Pfropfpolymerisation handelt es sich dann um eine radikalische Polymerisation olefinisch ungesättigter Reaktionspartner. Möglich ist beispielsweise auch, dass die zur Pfropfpolymerisation eingesetzten olefinisch ungesättigten Verbindungen mindestens eine Hydroxygruppe enthalten. Dann kann auch zunächst eine Anbindung der olefinisch ungesättigten Verbindungen über diese Hydroxygruppen durch Reaktion mit freien Isocyanatgruppen des Polyurethanharzes erfolgen. Diese Anbindung findet anstelle oder neben der radikalischen Reaktion der olefinisch ungesättigten Verbindungen mit den gegebenenfalls vorhandenen seiten- und/oder endständigen olefinisch ungesättigten Gruppen des Polyurethanharzes statt. Danach folgt dann wieder die Pfropfpolymerisation über radikalische Polymerisation wie sie weiter oben beschrieben wurde. Erhalten werden jedenfalls mit olefinisch ungesättigten Verbindungen, vorzugsweise olefinisch ungesättigten Monomeren, gepfropfte Polyurethanharze.

Als olefinisch ungesättigte Verbindungen, mit denen das Polyurethanharz (A) bevorzugt gepfropft wird, können praktisch alle radikalisch polymerisierbaren, olefinisch ungesättigten und organischen Monomere eingesetzt werden, die dem Fachmann für diese Zwecke zur Verfügung stehen. Beispielhaft seien einige bevorzugte Monomerklassen genannt:
- Hydroxyalkylester der (Meth)acrylsäure oder anderer alpha, beta -ethylenisch ungesättigter Carbonsäuren,
- (Meth)acrylsäurealkylester und/oder -cycloalkylester mit bis zu 20 Kohlenstoffatomen im Alkylrest,
- Ethylenisch ungesättigte Monomere, enthaltend mindestens eine Säuregruppe, insbesondere genau eine Carboxylgruppe, wie beispielsweise (Meth)acrylsäure,
- Vinylester von in alpha-Stellung verzweigten Monocarbonsäuren mit 5 bis 18 Kohlenstoffatomen,
- Umsetzungsprodukte aus (Meth)acrylsäure mit dem Glycidylester einer in alpha-Stellung verzweigten Monocarbonsäure mit 5 bis 18 Kohlenstoffatomen,
- Weitere ethylenisch ungesättigte Monomere wie Olefine (beispielsweise Ethylen), (Meth)acrylsäureamide, vinylaromatische Kohlenwasserstoffe (beispielsweise Styrol), Vinylverbindungen wie Vinylchlorid und/oder Vinylether wie Ethylvinylether.

Bevorzugt werden (Meth)acrylatgruppen-haltige Monomere eingesetzt, sodass das es sich bei den aufgepfropften Seitenketten um Poly(meth)acrylat-basierende Seitenketten handelt.

Die seiten- und/oder endständigen olefinisch ungesättigten Gruppen in dem Polyurethanharz, über die die Pfropfpolymerisation mit den olefinisch ungesättigten Verbindungen verlaufen kann, werden bevorzugt über bestimmte Monomere in das Polyurethanharz eingeführt. Diese bestimmten Monomere enthalten neben einer olefinisch ungesättigten Gruppe beispielsweise noch mindestens eine gegenüber Isocyanatgruppen reaktive Gruppe. Bevorzugt sind Hydroxygruppen sowie primäre und sekundäre Aminogruppen. Insbesondere bevorzugt sind Hydroxygruppen.

Natürlich können die beschriebenen Monomere, durch welche die seiten- und/oder endständigen olefinisch ungesättigten Gruppen in das Polyurethanharz eingeführt werden können, auch zum Einsatz kommen, ohne dass das Polyurethanharz danach noch zusätzlich mit olefinisch ungesättigten Verbindungen gepfropft wird. Bevorzugt ist allerdings, dass das Polyurethanharz mit olefinisch ungesättigten Verbindungen gepfropft ist.

Das bevorzugt enthaltene Polyurethanharz kann ein selbst- und/oder fremdvernetzendes Bindemittel sein. Bevorzugt umfasst das Polyurethanharz reaktive funktionelle Gruppen, durch die eine Fremdvernetzung möglich ist. In diesem Fall ist in dem pigmentierten wässrigen Basislack bevorzugt mindestens ein Vernetzungsmittel enthalten. Insbesondere handelt es sich bei den reaktiven funktionellen Gruppen, durch die eine Fremdvernetzung möglich ist, um Hydroxygruppen. Besonders vorteilhaft sind im Rahmen des erfindungsgemäßen Verfahrens polyhydroxyfunktionelle Polyurethanharze einsetzbar. Dies bedeutet, dass das Polyurethanharz im Mittel mehr als eine Hydroxygruppe pro Molekül enthält.

Die Herstellung des Polyurethanharzes erfolgt nach den üblichen Methoden der Polymerchemie. Gemeint sind dabei beispielsweise die Polymerisation von Polyisocyanaten und Polyolen zu Polyurethanen und die bevorzugt dann folgende Pfropfpolymerisation mit olefinisch ungesättigten Verbindungen. Diese Methoden sind dem Fachmann bekannt und können individuell angepasst werden. Beispielhafte Herstellungsverfahren und Reaktionsbedingungen sind der europäischen Patentschrift EP 0521 928 B1, Seite 2, Zeile 57 bis Seite 8, Zeile 16 zu entnehmen.

Wenn die bevorzugt eingesetzten Basislacke als selbstvernetzende Systeme vorliegen, dann liegt der Polyurethanharzgehalt bei 50 bis 100 Gew.-% bevorzugt 50 bis 90 Gew.-% und besonders bevorzugt 50 bis 80 Gew.-%, bezogen auf den filmbildenden Festkörper des Basislacks.

Unter filmbildendem Festkörper ist der nichtflüchtige Gewichtsanteil des Basislacks ohne Pigmente und gegebenenfalls Füllstoffe zu verstehen. Der filmbildende Festkörper ist folgendermaßen bestimmbar: Eine Probe des pigmentierten wässrigen Basislacks (etwa 1 g) wird mit der 50 bis 100-fachen Menge Tetrahydrofuran versetzt und dann etwa 10 Minuten gerührt. Anschließend werden die unlöslichen Pigmente und gegebenenfalls Füllstoffe abfiltriert, der Rückstand mit wenig THF nachgespült und von dem so erhaltenen Filtrat das THF am Rotationsverdampfer entfernt. Der Rückstand des Filtrats wird zwei Stunden bei 120°C getrocknet und der dabei resultierende filmbildende Festkörper ausgewogen.

Im Falle von fremdvernetzenden Systemen liegt der Polyurethanharzgehalt zwischen 10 und 80 Gew.-%, bevorzugt zwischen 15 und 75 Gew.-% und besonders bevorzugt zwischen 20 und 70 Gew.-%, jeweils bezogen auf den filmbildenden Festkörper des Basislacks.

Das bevorzugt enthaltene Polyurethanharz besitzt vorzugsweise ein zahlenmittleres Molekulargewicht von 200 bis 30000 g/mol, bevorzugt von 2000 bis 20000 g/mol (gemessen mittels Gelpermeationschromatographie gegen einen Polystyrolstandard; als Eluent wird Tetrahydrofuran eingesetzt). Es besitzt zudem beispielsweise eine Hydroxylzahl von 0 bis 250 mg KOH/g, insbesondere aber von 20 bis 150 mg KOH/g. Die Säurezahl des Polyurethanharzes liegt bevorzugt bei 5 bis 200 mg KOH/g, insbesondere bei 10 bis 40 mg KOH/g. Die Hydroxylzahl wird nach DIN / ISO 4629, die Säurezahl gemäß DIN 53402 bestimmt.

Es ist erfindungswesentlich, dass die in Stufe (1) des erfindungsgemäßen Verfahrens eingesetzten wässrigen Basislacke mindestens ein Phosphinoxid enthalten, das durch folgende Strukturformel (I) gekennzeichnet wird: 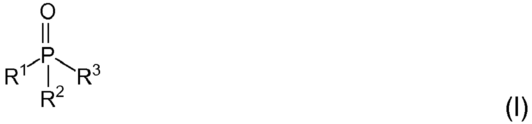 wobei die Reste R¹ bis R³ ausgewählt sind aus der Gruppe der aliphatischen oder aromatischen Kohlenwasserstoffe. Bevorzugt sind aliphatische Kohlenwasserstoffe mit 1 bis 20, besonders bevorzugt 1 bis 18 und ganz besonders bevorzugt 1 bis 16 Kohlenstoffatomen. Bei den aliphatischen Kohlenwasserstoffen handelt es sich bevorzugt um Alkylreste. Besonders bevorzugt handelt es sich um lineare Alkylreste. Bei den aromatischen Kohlenwasserstoffen handelt es sich bevorzugt um einen Phenylrest.

Bevorzugt werden alle Reste R¹ bis R³ ausgewählt aus der Gruppe der aliphatischen Kohlenwasserstoffe. Bevorzugt sind aliphatische Kohlenwasserstoffe mit 1 bis 20, besonders bevorzugt 1 bis 18 und ganz besonders bevorzugt 1 bis 16 Kohlenstoffatomen. Bevorzugt handelt es sich hier um Alkylreste. Besonders bevorzugt handelt es sich um lineare Alkylreste. Ebenfalls ganz besonders bevorzugt handelt es sich bei R¹ bis R³ um einen Octyl- oder Hexylrest.

Es ist weiterhin bevorzugt, dass Phosphinoxide mit genau zwei unterschiedlichen Arten von aliphatischen Kohlenwasserstoffresten eingesetzt werden. In einem solchen Fall wird ein Gemisch aus Phosphinoxiden eingesetzt. Das heißt, liegen zwei unterschiedliche Arten von aliphatischen Kohlenwasserstoffresten, hier mit R und R' bezeichnet, vor, so enthält ein entsprechendes Gemisch bevorzugt die Spezies R₃P(O), R₂R'P(O), RR'₂P(O) und R'₃P(O), also alle möglichen Kombinationen die sich mit zwei unterschiedlichen Arten von aliphatischen Kohlenwasserstoffresten ergeben. Besonders bevorzugt handelt es sich bei R und R' um aliphatische Kohlenwasserstoffe mit 1 bis 20, besonders bevorzugt 1 bis 18 und ganz besonders bevorzugt 1 bis 16 Kohlenstoffatomen. Bevorzugt handelt es sich um Alkylreste. Besonders bevorzugt handelt es sich um lineare Alkylreste. Ebenfalls ganz besonders bevorzugt handelt es sich bei R und R' um einen Octyl- und einen Hexylrest.

In einer ganz besonders bevorzugten Ausführungsform wird ein Gemisch von erfindungsgemäß einzusetzenden Phosphinoxiden eingesetzt, wobei es sich bei den Resten R¹ bis R³ um einen C₁ bis C₁₆-Alkylrest handelt und genau zwei unterschiedliche Arten von Resten, hier mit R und R' bezeichnet vorhanden sind, so dass das besagte Gemisch die Spezies R₃P(O), R₂R'P(O), RR'₂P(O) und R'₃P(O) enthält.

Es ist ebenfalls bevorzugt, dass alle Reste R¹ bis R³ aus der Gruppe der aromatischen Kohlenwasserstoffe ausgewählt sind. Besonders bevorzugt handelt es sich hierum um Phenylreste.

Das mindestens eine Phosphinoxid wird vorzugsweise ausgewählt aus der Gruppe bestehend aus Cyanex® 923 (Mischung verschiedener Hexyl- und Octylphosphinoxide) und Triphenylphosphinoxid (Cyanex® 923 ist ein Markenname der Firma Cytec).

Die Summe über die gewichtsprozentualen Anteile aller Phosphinoxide gemäß Strukturformel (I) beträgt 0,1 bis 5 Gew.-%, bevorzugt 0,1 bis 4,5 Gew.-% und besonders bevorzugt 0,15 bis 4 Gew.-% bezogen auf das Gesamtgewicht des in Stufe (1) aufgetragenen wässrigen Basislacks. Dabei kann eines der vorgenannten Phosphinoxide oder eine Mischung der erfindungsgemäß einzusetzenden Phosphinoxide eingesetzt werden.

Beträgt die Summe über die gewichtsprozentualen Anteile aller Phosphinoxide gemäß Strukturformel (I) weniger als 0,1 Gew.-% bezogen auf das Gesamtgewicht des in Stufe (1) aufgetragenen wässrigen Basislacks, so wird die der Erfindung zugrundeliegende Aufgabe nicht gelöst. Beträgt die Summe über die gewichtsprozentualen Anteile aller Phosphinoxide gemäß Strukturformel (I) mehr als 5 Gew.-% bezogen auf das Gesamtgewicht des in Stufe (1) aufgetragenen wässrigen Basislacks so treten Nachteile wie z.B. eine Haftungsverschlechterung bei unterbrannten Aufbauten auf.

Die Summe über die gewichtsprozentualen Anteile aller Phosphinoxide gemäß Strukturformel (I) beträgt 0,1 bis 5 Gew.-% bezogen auf das Gesamtgewicht des in Stufe (1) aufgetragenen wässrigen Basislacks. Für den Fall, dass bevorzugte Ausführungsformen des besagten Phosphinoxids eingesetzt werden, beträgt die Summe über die gewichtsprozentualen Anteile aller bevorzugten Ausführungsformen des besagten Phosphinoxids bevorzugt ebenfalls 0,1 bis 5 Gew.-% bezogen auf das Gesamtgewicht des in Stufe (1) aufgetragenen wässrigen Basislacks. Besonders bevorzugt enthält der in Stufe (1) aufgetragene wässrige Basislack als Phosphinoxid gemäß Strukturformel (I) ausschließlich bevorzugte Ausführungsformen des besagten Phosphinoxids.

In einer bevorzugten Ausführungsform beträgt die Summe über die gewichtsprozentualen Anteile aller Phosphinoxide gemäß Strukturformel (I) 0,1 bis 4,5 Gew.-% bezogen auf das Gesamtgewicht des in Stufe (1) aufgetragenen wässrigen Basislacks. Für den Fall, dass bevorzugte Ausführungsformen des besagten Phosphinoxids eingesetzt werden, beträgt die Summe über die gewichtsprozentualen Anteile aller bevorzugten Ausführungsformen des besagten Phosphinoxids bevorzugt ebenfalls 0,1 bis 4,5 Gew.-% bezogen auf das Gesamtgewicht des in Stufe (1) aufgetragenen wässrigen Basislacks. Besonders bevorzugt enthält der in Stufe (1) aufgetragene wässrige Basislack als Phosphinoxid gemäß Strukturformel (I) ausschließlich bevorzugte Ausführungsformen des besagten Phosphinoxids.

In einer besonders bevorzugten Ausführungsform beträgt die Summe über die gewichtsprozentualen Anteile aller Phosphinoxide gemäß Strukturformel (I) 0,15 bis 4 Gew.-% bezogen auf das Gesamtgewicht des in Stufe (1) aufgetragenen wässrigen Basislacks. Für den Fall, dass bevorzugte Ausführungsformen des besagten Phosphinoxids eingesetzt werden, beträgt die Summe über die gewichtsprozentualen Anteile aller bevorzugten Ausführungsformen des besagten Phosphinoxids bevorzugt ebenfalls 0,15 bis 4 Gew.-% bezogen auf das Gesamtgewicht des in Stufe (1) aufgetragenen wässrigen Basislacks. Besonders bevorzugt enthält der in Stufe (1) aufgetragene wässrige Basislack als Phosphinoxid gemäß Strukturformel (I) ausschließlich bevorzugte Ausführungsformen des besagten Phosphinoxids.

Als Beispiel für in diesem Sinne bevorzugte Ausführungsformen des besagten Phosphinoxids seien Phosphinoxide der Strukturformel (I) genannt, wobei alle Reste R¹ bis R³ ausgewählt sind aus der Gruppe der aliphatischen Kohlenwasserstoffe.

Als ein anders Beispiel für in diesem Sinne bevorzugte Ausführungsformen des besagten Phosphinoxids sei ein Gemisch von erfindungsgemäß einzusetzenden Phosphinoxiden genannt, wobei es sich bei den Resten R¹ bis R³ um einen C₁ bis C₁₆-Alkylrest handelt und genau zwei unterschiedliche Arten von Resten, hier mit R und R' bezeichnet, vorhanden sind, so dass das besagte Gemisch die Spezies R₃P(O), R₂R'P(O), RR'₂P(O) und R'₃P(O) enthält.

Als ein weiteres Beispiel für in diesem Sinne bevorzugte Ausführungsformen des besagten Phosphinoxids seien Phosphinoxide der Strukturformel (I) genannt, wobei alle Reste R¹ bis R³ ausgewählt sind aus der Gruppe der aromatischen Kohlenwasserstoffe.

Bevorzugt ist zudem ein Verdicker enthalten. Als Verdicker eignen sich anorganische Verdicker aus der Gruppe der Schichtsilikate. Neben den anorganischen Verdickern können jedoch auch ein oder mehrere organische Verdicker eingesetzt werden. Diese werden vorzugsweise gewählt aus der Gruppe bestehend aus (Meth)acrylsäure-(Meth)acrylat-Copolymerisat-Verdickern, wie beispielsweise dem Handelsprodukt Viscalex HV30 (Ciba, BASF) und Polyurethanverdickern, wie beispielsweise dem Handelsprodukt DSX ® 1550 der Firma Cognis. Als (Meth)acrylsäure-(Meth)acrylat-Copolymerisat-Verdicker werden solche bezeichnet, die neben Acrylsäure und/oder Methacrylsäure auch ein oder mehrere Acrylsäureester (das heißt Acrylate) und/oder ein oder mehrere Methacrylsäureester (das heißt Methacrylate) einpolymerisiert enthalten. Den (Meth)acrylsäure-(Meth)acrylat-Copolymerisat-Verdickern gemein ist, dass diese in alkalischem Medium, das heißt bei pH-Werten > 7, insbesondere > 7,5 durch Salzbildung der Acrylsäure und/oder Methacrylsäure, das heißt durch die Bildung von Carboxylatgruppen einen starken Viskositätsanstieg zeigen. Werden (Meth)acrylsäureester eingesetzt, die aus (Meth)acrylsäure und einem C₁-C₆-Alkanol gebildet werden, so erhält man im wesentlichen nicht-assoziativ wirkende (Meth)acrylsäure-(Meth)acrylat-Copolymerisat-Verdicker, wie beispielsweise das oben genannte Viscalex HV30. Im Wesentlichen nicht-assoziativ wirkende (Meth)acrylsäure-(Meth)acrylat-Copolymerisat-Verdicker werden in der Literatur auch als ASE-Verdicker ("Alkali Soluble/Swellable Emulsion", alkalisch lösliche/quellbare Emulsion oder Dispersion) bezeichnet. Als (Meth)acrylsäure-(Meth)acrylatCopolymerisat-Verdicker sind jedoch auch sogenannte HASE-Verdicker ("Hydrophobically Modified Anionic Soluble Emulsions", hydrophob modifizierte anionisch lösliche Emulsion oder Dispersion) einsetzbar. Diese werden erhalten, wenn als Alkanol anstelle oder zusätzlich zu den C₁-C₆-Alkanolen solche mit einer größeren Anzahl an Kohlenstoffatomen, beispielsweise 7 bis 30, oder 8 bis 20 Kohlenstoffatomen eingesetzt werden. HASE-Verdicker wirken im Wesentlichen assoziativ verdickend. Die einsetzbaren (Meth)acrylsäure-(Meth)acrylatCopolymerisat-Verdicker eignen sich aufgrund ihrer verdickenden Eigenschaften nicht als Bindemittel-Harze, sie fallen somit nicht unter die als Bindemittel bezeichneten physikalisch, thermisch oder thermisch und aktinisch härtbaren Bindemitteln und sind somit explizit verschieden von den Poly(meth)acrylat basierten Bindemitteln, die in den erfindungsgemäßen Basislackzusammensetzungen-Zusammensetzungen eingesetzt werden können. Als Polyurethanverdicker sind die in der Literatur als HEUR ("Hydrophobically Modified Ethylene Oxide Urethane Rheology Modifiers", hydrophob modifizierte Ethylenoxid-Urethan-Rheologieadditive) bezeichneten, assoziativ wirkenden Verdicker zu verstehen. Chemisch handelt es sich hierbei um nichtionische verzweigte oder unverzweigte Blockcopolymere aus Polyethylenoxid-Ketten (manchmal auch Polypropylenoxid-Ketten), die über Urethanbindungen miteinander verknüpft sind und die endständige langkettige Alkyl- oder Alkylengruppen mit 8 bis 30 Kohlenstoffatomen tragen. Typische Alkylgruppen sind beispielsweise Dodecyl oder Stearyl-Gruppen, eine typische Alkenylgruppe ist beispielsweise eine Oleylgruppe, eine typische Arylgruppe ist die Phenylgruppe und eine typische alkylierte Arylgruppe ist beispielsweise eine Nonylphenylgruppe. Die Polyurethan-Verdicker eignen sich aufgrund ihrer verdickenden Eigenschaften und Struktur nicht als physikalisch, thermisch oder thermisch und physikalisch härtbare Bindemittel-Harze. Sie sind somit explizit verschieden von den Polyurethanen, die in den erfindungsgemäßen Basislack-Zusammensetzungen als Bindemittel eingesetzt werden können.

Der einzusetzende pigmentierte wässrige Basislack enthält bevorzugt zudem mindestens einen Polyester, insbesondere einen Polyester mit einem zahlenmittleren Molekulargewicht von 400 bis 5000 g/mol (gemessen mittels Gelpermeationschromatographie gegen einen Polystyrolstandard; als Eluat wird Tetrahydrofuran eingesetzt). Entsprechende Polyester werden in DE 4009858 in Spalte 6, Zeile 53 bis Spalte 7, Zeile 61 und Spalte 10, Zeile 24 bis Spalte 13, Zeile 3 beschrieben.

Darüber hinaus kann der pigmentierte wässrige Basislack noch mindestens einen Zusatzstoff enthalten. Beispiele für derartige Zusatzstoffe sind rückstandsfrei oder im Wesentlichen rückstandsfrei thermisch zersetzbare Salze, von Polyurethanharzen verschiedene physikalisch, thermisch und/oder mit aktinischer Strahlung härtbare Harze als Bindemittel, weitere Vernetzungsmittel, organische Lösemittel, Reaktivverdünner, transparente Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Sag-Control-Agents (SCAs), Flammschutzmittel, Korrosionsinhibitoren, Wachse, Sikkative, Biozide und Mattierungsmittel.

Geeignete Zusatzstoffe der vorstehend genannten Art sind beispielsweise aus
- der deutschen Patentanmeldung DE 199 48 004 A1, Seite 14, Zeile 4, bis Seite 17, Zeile 5,
- dem deutschen Patent DE 100 43 405 C1, Spalte 5, Absätze [0031] bis [0033],
bekannt. Sie werden in den üblichen und bekannten Mengen eingesetzt.

Der Festkörpergehalt der erfindungsgemäß eingesetzten Basislacke kann je nach den Erfordernissen des Einzelfalls variieren. In erster Linie richtet sich der Festkörpergehalt nach der für die Applikation, insbesondere Spritzapplikation, erforderlichen Viskosität, so dass er vom Fachmann aufgrund seines allgemeinen Fachwissens gegebenenfalls unter Zuhilfenahme weniger orientierender Versuche eingestellt werden kann.

Vorzugsweise liegt der Festkörpergehalt der Basislacke bei 5 bis 70 Gew.-%, besonders bevorzugt bei 10 bis 65 Gew.-% und insbesondere bevorzugt bei 15 bis 60 Gew.-%.

Unter Festkörpergehalt ist derjenige Gewichtsanteil zu verstehen, der unter festgelegten Bedingungen beim Eindampfen als Rückstand verbleibt. In der vorliegenden Anmeldung wurde der Festkörper nach DIN EN ISO 3251 bestimmt. Die Messdauer betrug 60 min bei 125°C.

Die Herstellung der erfindungsgemäß eingesetzten Basislacke kann unter Einsatz der für die Herstellung von Basislacken üblichen und bekannten Mischverfahren und Mischaggregate erfolgen.

Die erfindungsgemäßen Basislacke können sowohl als Einkomponenten(1K), Zweikomponenten(2K)- oder Mehrkomponenten(3K, 4K)-Systeme zur Anwendung kommen. Bevorzugt sind (1K)-Systeme.

In Einkomponenten(1K)-Systemen liegen Bindemittel und Vernetzungsmittel in einer Komponente vor. Voraussetzung hierfür ist, dass die beiden Bestandteile erst bei höheren Temperaturen und/oder bei Bestrahlen mit aktinischer Strahlung miteinander vernetzen.

In Zweikomponenten(2K)-Systemen liegen beispielsweise Bindemittel und Vernetzungsmittel getrennt voneinander in zwei Komponenten vor, die erst kurz vor der Applikation zusammengegeben werden. Diese Form wird dann gewählt, wenn Bindemittel und Vernetzungsmittel bereits bei Raumtemperatur miteinander reagieren. Lacke dieser Art werden vor allem zur Beschichtung thermisch empfindlicher Substrate, insbesondere in der Autoreparaturlackierung, angewandt.

Die Applikation des erfindungsgemäß eingesetzten pigmentierten wässrigen Basislacks auf ein Substrat kann in den im Rahmen der Automobilindustrie üblichen Schichtdicken im Bereich von beispielsweise 5 bis 100 Mikrometer, bevorzugt 5 bis 60 Mikrometer erfolgen. Dabei werden beispielsweise Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heissspritzapplikation wie zum Beispiel Hot-Air-Heissspritzen.

Nach der Applikation des pigmentierten wässrigen Basislacks kann dieser nach bekannten Methoden getrocknet werden. Beispielsweise können (1K)-Basislacke bei Raumtemperatur für 1 bis 60 Minuten abgelüftet werden und darauf folgend bevorzugt bei gegebenenfalls leicht erhöhten Temperaturen von 30 bis 80°C getrocknet werden. Unter Ablüften und Trocknung ist im Rahmen der vorliegenden Erfindung ein Abdunsten von organischen Lösemitteln und/oder Wasser zu verstehen, wodurch der Lack trockener, aber noch nicht gehärtet wird. beziehungsweise noch kein vollständig vernetzter Lackfilm gebildet wird.

Dann wird ein handelsüblicher Klarlack nach ebenfalls gängigen Methoden appliziert, wobei die Schichtdicken wiederum in den gängigen Bereichen, beispielsweise 5 bis 100 Mikrometer, liegen. Solche Klarlacke sind dem Fachmann bekannt.

Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet. Dabei finden beispielsweise Vernetzungsreaktionen statt, wodurch eine erfindungsgemäße farb- und/oder effektgebende mehrschichtige Lackierung auf einem Substrat hergestellt wird. Die Härtung erfolgt bevorzugt thermisch oder thermisch und mit aktinischer Strahlung bei Temperaturen von 80 bis 200°C.

Mit Hilfe des erfindungsgemäßen Verfahrens können metallische und nichtmetallische Substrate, insbesondere Kunststoffsubstrate, vorzugsweise Automobilkarosserien oder Teile davon lackiert werden.

Gegenstand der Erfindung ist zudem eine farb- und/oder effektgebende mehrschichtige Lackierung, welche nach dem erfindungsgemäßen Verfahren herstellbar ist. Die vorstehend genannten Ausführungen bezüglich des wässrigen Basislacks, welcher beispielsweise in Stufe (1) des erfindungsgemäßen Verfahrens zur Herstellung einer farb- und/oder effektgebenden mehrschichtigen Lackierung eingesetzt wird sowie dem darin enthaltenden Phosphinoxid, gelten somit auch für die in Rede stehende farb- und/oder effektgebende mehrschichtige Lackierung. Dies gilt insbesondere auch für alle genannten bevorzugten, besonders bevorzugten und ganz besonders bevorzugten Merkmale.

Die vorliegende Erfindung betrifft weiterhin das oben beschriebene Verfahren zum Ausbessern von Fehlstellen auf den erfindungsgemäßen farb- und/oder effektgebenden mehrschichtigen Lackierungen, wobei in Stufe (1) ein pigmentierter wässriger Basislack eingesetzt wird, der mindestens ein Phosphinoxid der folgenden Strukturformel (I) enthält: 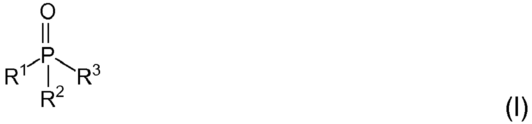 wobei die Reste R¹ bis R³ ausgewählt sind aus der Gruppe der aliphatischen oder aromatischen Kohlenwasserstoffe und zudem die Summe über die gewichtsprozentualen Anteile aller Phosphinoxide gemäß Strukturformel (I) 0,1 bis 5 Gew.-% bezogen auf das Gesamtgewicht des in Stufe (1) aufgetragenen wässrigen Basislacks beträgt.

Es ist bevorzugt, dass der in Stufe (1) des erfindungsgemäßen Verfahrens zum Ausbessern von Fehlstellen eingesetzte wässrige Basislack derselbe ist, wie der, welcher im erfindungsgemäßen Verfahren zur Herstellung einer farb- und/oder effektgebenden mehrschichtigen Lackierung eingesetzt wird. Die vorstehend genannten Ausführungen bezüglich des wässrigen Basislacks gelten somit auch für das in Rede stehende Verfahren zum Ausbessern von Fehlstellen auf einer farb- und/oder effektgebenden mehrschichtigen Lackierung. Dies gilt insbesondere auch für alle genannten bevorzugten, besonders bevorzugten und ganz besonders bevorzugten Merkmale.

Bekanntermaßen können die mit Hilfe des erfindungsgemäßen Verfahrens hergestellten farb- und/oder effektgebenden mehrschichtigen Lackierungen Fehlstellen aufweisen. Als Fehlstellen beziehungsweise Filmfehler werden im Allgemeinen Störungen an und in der Beschichtung, die meist nach ihrer Form oder ihrem Aussehen benannt werden, bezeichnet. Dem Fachmann ist eine Vielzahl von möglichen Arten von solchen Filmfehlern bekannt. Diese werden beispielsweise in Römpp-Lexikon Lacke und Druckfarben, Georg Thieme Verlag, Stuttgart, New York, 1998, Seite 235,"Filmfehler" beschrieben.

Die besagten Fehlstellen lassen sich nach dem vorstehend beschriebenen erfindungsgemäßen Verfahren ausbessern.

Vor der Applikation des pigmentierten wässrigen Basislacks kann die Fehlstelle angeschliffen werden.

Die Applikation des pigmentierten wässrigen Basislacks auf die Fehlstelle in der Originallackierung erfolgt vorzugsweise durch pneumatische Zerstäubung. Nach der Applikation des pigmentierten wässrigen Basislacks kann dieser nach bekannten Methoden getrocknet werden. Beispielsweise kann der Basislack bei Raumtemperatur für 1 bis 60 Minuten getrocknet werden und darauf folgend bei gegebenenfalls leicht erhöhten Temperaturen von 30 bis 80°C getrocknet werden. Unter Ablüften und Trocknung ist im Rahmen der vorliegenden Erfindung ein Abdunsten von organischen Lösemitteln und/oder Wasser zu verstehen, wodurch der Lack trockener, aber noch nicht gehärtet wird, beziehungsweise noch kein vollständig vernetzter Lackfilm gebildet wird.

Anschließend wird auf die zu reparierende Stelle ein handelsüblicher Klarlack nach ebenfalls gängigen Methoden appliziert. Wie in der Reparaturlackierung allgemein üblich und dem Fachmann somit bekannt, werden bevorzugt solche Klarlacke eingesetzt, die bereits bei relativ niedrigen Temperaturen von 30 bis 80°C ausgehärtet werden können. Hierzu eignen sich insbesondere Zweikomponentenklarlacke.

Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet. Die Härtung erfolgt bevorzugt thermisch oder thermisch und mit aktinischer Strahlung bei Temperaturen von 30 bis 80°C.

Ein weiterer Gegenstand der Erfindung ist ein pigmentierter wässriger Basislack, welcher dadurch gekennzeichnet ist, dass der Basislack mindestens ein Phosphinoxid der folgenden Strukturformel (I) enthält: 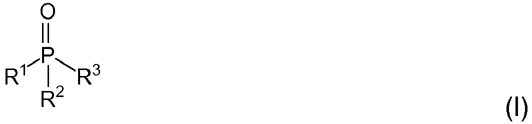 wobei die Reste R¹ bis R³ ausgewählt sind aus der Gruppe der aliphatischen oder aromatischen Kohlenwasserstoffe und zudem die Summe über die gewichtsprozentualen Anteile aller Phosphinoxide gemäß Strukturformel (I) 0,1 bis 5 Gew.-% bezogen auf das Gesamtgewicht des Basislacks beträgt. Dieser pigmentierte wässrige Basislack ist insbesondere zur Herstellung von farb- und/oder effektgebenden mehrschichtigen Lackierungen geeignet. Die vorstehend genannten Ausführungen bezüglich des wässrigen Basislacks, welcher beispielsweise in Stufe (1) des erfindungsgemäßen Verfahrens zur Herstellung einer farb- und/oder effektgebenden mehrschichtigen Lackierung eingesetzt wird sowie dem darin enthaltenden Phosphinoxid, gelten somit auch für den in Rede stehenden pigmentierten wässrigen Basislack. Dies gilt insbesondere auch für alle vorstehend genannten bevorzugten, besonders bevorzugten und ganz besonders bevorzugten Merkmale.

Schließlich ist ebenfalls die Verwendung von mindestens einem Phosphinoxid in pigmentierten wässrigen Basislacken zur Haftungsverbesserung Gegenstand der Erfindung, welche dadurch gekennzeichnet ist, dass der besagte Basislack mindestens ein Phosphinoxid der folgenden Strukturformel (I) enthält: 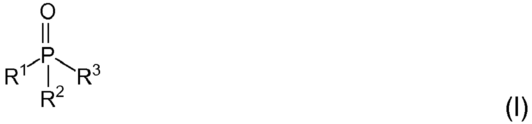 wobei die Reste R¹ bis R³ ausgewählt sind aus der Gruppe der aliphatischen oder aromatischen Kohlenwasserstoffe und zudem die Summe über die gewichtsprozentualen Anteile aller Phosphinoxide gemäß Strukturformel (I) 0,1 bis 5 Gew.-% bezogen auf das Gesamtgewicht des Basislacks beträgt.

Unter Haftungsverbesserung ist eine Verbesserung der Haftung im Vergleich zu solchen pigmentierten wässrigen Basislacken zu verstehen, welche kein erfindungsgemäß einzusetzendes Phosphinoxid enthalten. Die Haftung lässt sich beispielsweise mit Hilfe der Dampfstrahlbelastung nach DIN 55662:2009-12 (Verfahren A) bestimmen.

Alle vorstehend genannten Ausführungen bezüglich des wässrigen Basislacks, welcher beispielsweise in Stufe (1) des erfindungsgemäßen Verfahrens zur Herstellung einer farb- und/oder effektgebenden mehrschichtigen Lackierung eingesetzt wird sowie dem darin enthaltenden Phosphinoxid, gelten somit auch für die erfindungsgemäße Verwendung mindestens eines Phosphinoxids in pigmentierten wässrigen Basislacken. Dies gilt insbesondere auch für alle vorstehend genannten bevorzugten, besonders bevorzugten und ganz besonders bevorzugten Merkmale.

Bevorzugt wird das besagte Phosphinoxid zur Haftungsverbesserung in der Reparaturlackierung eingesetzt. Hierunter ist insbesondere zu verstehen, dass an den ausgebesserten Stellen die dort zur Reparatur aufgebrachte Lackierung hervorragend haftet.

Im Folgenden wird die Erfindung anhand von Beispielen erläutert.

### Beispiele

### 1. Herstellung eines silbernen Wasserbasislacks 1

Die in der Tabelle A unter "wässrige Phase" aufgeführten Komponenten werden in der angegebenen Reihenfolge zu einer wässrigen Mischung zusammengerührt. Im nächsten Schritt wird aus den unter "organische Phase" aufgeführten Komponenten eine organische Mischung hergestellt. Die organische Mischung wird zur wässrigen Mischung gegeben. Sodann wird 10 min lang gerührt und mit Hilfe von deionisiertem Wasser und Dimethanolamin auf einen pH Wert von 8 und eine Spritzviskosität von 58 mPas bei einer Scherbelastung von 1000/sec, gemessen mit einem RotationsViskosimeter (Gerät Rheomat RM 180 der Firma Mettler-Toledo) bei 23°C, eingestellt.

**Tabelle A**

| Komponente | Gewichtsteile |
|---|---|
| **Wässrige Phase** | |
| 3%ige Na-Mg-Schichtsilikatlösung | 26 |
| Deionisertes Wasser | 3 |
| Butylglykol | 1,75 |
| Polyurethanacrylat; hergestellt gemäß S. 7, Z. 55-S.8, Z. 23 der DE-A-4437535 | 4,5 |
| 50 Gew.-% ige Lösung DSX 1550 (BASF) Rheologiemittel | 0,6 |
| Polyester; hergestellt gemäß Beispiel D, Spalte 16, Z. 37-59 der DE-A-4009858 | 3,2 |
| Tensid S (BASF) | 0,3 |
| Butylglykol | 0,55 |
| Cymel 203; Melaminformaldehydharz, erhältlich von Cytec | 4,1 |
| 10%iges Dimethylethanolamin in Wasser | 0,3 |
| Deionisiertes Wasser | 6 |
| Polyurethanacrylat; hergestellt gemäß S. 19, Z. 44-S. 20, Z. 7 der DE-A-19948004 | 20,4 |
| Tensid S (BASF) | 1,6 |
| Butylglykol | 0,5 |
| 3 Gew.-%ige wässrige Viscalex HV 30 Lösung; Rheologiemittel, erhältlich von BASF, in Wasser | 3,9 |

| **Organische Phase** | |
|---|---|
| Mischung zweier handelsüblicher Aluminiumpigmente, erhältlich von Firma Altana-Eckart | 6,2 |
| Butylglykol | 7,5 |
| Polyester; hergestellt gemäß Beispiel D, Spalte 16, Z. 37-59 der DE-A-4009858 | 5 |

### Wasserbasislack E1:

Zur Herstellung des erfindungsgemäßen Wasserbasislacks E1 wurde der Wasserbasislack 1 mit 2,5 Gewichtsteilen von kommerziell erhältlichen Cyanex® 923 versetzt.

### Wasserbasislack E2:

Zur Herstellung des erfindungsgemäßen Wasserbasislacks E2 wurde der Wasserbasislack 1 mit 2,5 Gewichtsteilen von kommerziell erhältlichen Triphenylphosphinoxid versetzt.

**Tabelle 1: Zusammensetzungen der Wasserbasislacke 1 und E1 und E2**

| **WBL** | **[Gew.-%]** | **Phosphinoxid** |
|---|---|---|
| 1 | -- | -- |
| E1 | 2,5 | Cyanex® 923 |
| E2 | 2,5 | Triphenylphosphinoxid |

Die Gewichtsprozentangaben in Tabelle 1 beziehen sich auf den Anteil des Phosphinoxids im jeweiligen Wasserbasislack.

### Vergleichsversuch zwischen Wasserbasislack 1 und den Wasserbasislacken E1 und E2

Zur Bestimmung der Stabilität gegenüber Dampfstrahlbelastung wurden die Mehrschichtlackierungen nach der folgenden allgemeinen Vorschrift hergestellt:
Ein mit einer Standard-KTL (Cathoguard^{®} 800 der Firma BASF Coatings GmbH) beschichtetes Stahlblech der Abmessungen 10 x 20cm wurde mit einem Standard-Füller (ALG 670173 - Füller mittelgrau der Firma Hemmelrath) beschichtet. Nach Zwischentrocknen des wäßrigen Füllers über einen Zeitraum von 10 Minuten bei 80°C wurde der Füller bei einer Temperatur von 190°C über einen Zeitraum von 30 Minuten eingebrannt.

Der Wasserbasislack wurde nun pneumatisch appliziert. Die resultierende Wasserbasislackschicht wurde 2 Minuten bei Raumtemperatur abgelüftet und anschließend während 10 Minuten im Umluftofen bei 70°C getrocknet. Auf die getrocknete Wasserbasislackschicht wurde ein üblicher Zweikomponentenklarlack appliziert (Progloss^{®} 345 der Firma BASF Coatings GmbH). Die resultierende Klarlackschicht wurde während 20 Minuten bei Raumtemperatur abgelüftet. Anschließend wurden die Wasserbasislackschicht und die Klarlackschicht in einem Umluftofen während 30 Minuten bei 160°C gehärtet. Der vorliegende Aufbau stellt einen überbrannten Originalaufbau und wird im Weiteren als Originallackierung bezeichnet.

Diese Originallackierung wird mit einem Schleifpapier angeschliffen und anschließend der Wasserbasislack auf diese angeschliffene Originallackierung pneumatisch appliziert. Die resultierende Wasserbasislackschicht wurde 2 Minuten bei Raumtemperatur abgelüftet und anschließend während 10 Minuten im Umluftofen bei 70°C getrocknet. Auf die getrocknete Wasserbasislackschicht wurde ein sogenannter 80°C-Zweikomponentenklarlack (FF230500 2K Reparaturklarlack, kratzfest der Firma BASF Coatings GmbH) aufgebracht. Die resultierende Klarlackschicht wurde während 20 Minuten bei Raumtemperatur abgelüftet. Anschließend wurden die Wasserbasislackschicht und die Klarlackschicht in einem Umluftofen während 30 Minuten bei 80°C gehärtet.

Die so behandelten Stahlbleche wurden nun nach DIN 55662:2009-12 (Verfahren A) einer Dampfstrahlprüfung unterworfen und anschließend gemäß der vorgenannten DIN beurteilt.

**Tabelle 2: Dampfstrahlergebnisse für Wasserbasislack 1 und die Wasserbasislacke E1 und E2**

| **WBL** | **Dampfstrahlbeurteilung** | **Beurteilung** |
|---|---|---|
| 1 | 5a | niO |
| E1 | 0 | iO |
| E2 | 0 | iO |

| | | |
|---|---|---|
| Erklärung: iO = zufriedenstellendes Ergebnis niO = nicht zufriedenstellendes Ergebnis | | |

Die Ergebnisse untermauern, dass bei Einsatz der erfindungsgemäßen Phosphinoxide die Stabilität gegenüber Dampfstrahlbelastung verbessert wird.

## Patentansprüche

1. Verfahren zur Herstellung einer farb- und/oder effektgebenden mehrschichtigen Lackierung, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,
**dadurch gekennzeichnet, dass** in Stufe (1) ein pigmentierter wässriger Basislack eingesetzt wird, der mindestens ein Phosphinoxid der folgenden Strukturformel (I) enthält: 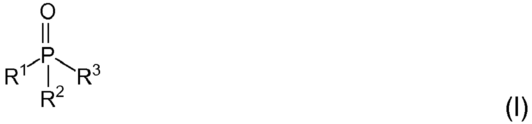 wobei die Reste R¹ bis R³ ausgewählt sind aus der Gruppe der aliphatischen oder aromatischen Kohlenwasserstoffe und zudem die Summe über die gewichtsprozentualen Anteile aller Phosphinoxide gemäß Strukturformel (I) 0,1 bis 5 Gew.-% bezogen auf das Gesamtgewicht des in Stufe (1) aufgetragenen wässrigen Basislacks beträgt.

2. Verfahren nach Anspruch 1, **dadurch gekennzeichnet, dass** die Summe über die gewichtsprozentualen Anteile aller Phosphinoxide gemäß Strukturformel (I) 0,1 bis 4,5 Gew.-% bezogen auf das Gesamtgewicht des in Stufe (1) aufgetragenen wässrigen Basislacks beträgt.

3. Verfahren nach mindestens einem der Ansprüche 1 und 2, **dadurch gekennzeichnet, dass** in Stufe (1) ein pigmentierter wässriger Basislack eingesetzt wird, der als Bindemittel mindestens ein gesättigtes oder ungesättigtes Polyurethanharz enthält.

4. Verfahren nach mindestens einem der Ansprüche 1 bis 3, **dadurch gekennzeichnet dass** in Stufe (1) ein pigmentierter wässriger Basislack eingesetzt wird, der mindestens ein Vernetzungsmittel ausgewählt aus der Gruppe bestehend aus Aminoplastharzen und blockierten oder unblockierten Polyisocyanaten enthält.

5. Verfahren nach mindestens einem der Ansprüche 1 bis 4, **dadurch gekennzeichnet, dass** alle Reste R¹ bis R³ aus der Gruppe der aliphatischen Kohlenwasserstoffe ausgewählt werden.

6. Verfahren nach mindestens einem der Ansprüche 1 bis 5, **dadurch gekennzeichnet, dass** ein Gemisch der besagten Phosphinoxide eingesetzt wird, wobei es sich bei den Resten R¹ bis R³ um einen C₃- bis C₁₆-Alkylrest handelt und genau zwei unterschiedliche Arten von Resten, R und R' vorhanden sind, so dass das besagte Gemisch die Spezies R₃P(O), R₂R'P(O), RR'₂P(O) und R'₃P(O) enthält.

7. Verfahren nach mindestens einem der Ansprüche 1 bis 4, **dadurch gekennzeichnet, dass** alle Reste R¹ bis R³ ausgewählt aus der Gruppe der aromatischen Kohlenwasserstoffe.

8. Farb- und/oder effektgebende mehrschichtige Lackierung, herstellbar nach dem Verfahren gemäß den Ansprüchen 1 bis 7.

9. Verfahren zum Ausbessern von Fehlstellen auf der farb- und/oder effektgebenden mehrschichtigen Lackierung gemäß Anspruch 8, bei dem
(1) ein pigmentierter wässriger Basislack auf die Fehlstelle aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,
**dadurch gekennzeichnet, dass** in Stufe (1) ein pigmentierter wässriger Basislack eingesetzt wird, der mindestens ein Phosphinoxid der folgenden Strukturformel (I) enthält: 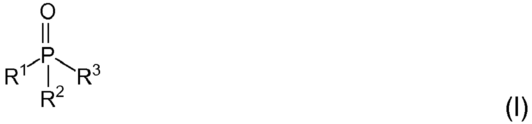 wobei die Reste R¹ bis R³ ausgewählt sind aus der Gruppe der aliphatischen oder aromatischen Kohlenwasserstoffe und zudem die Summe über die gewichtsprozentualen Anteile aller Phosphinoxide gemäß Strukturformel (I) 0,1 bis 5 Gew.-% bezogen auf das Gesamtgewicht des in Stufe (1) aufgetragenen wässrigen Basislacks beträgt.

10. Verfahren nach Anspruch 9, **dadurch gekennzeichnet, dass** in Stufe (1) ein pigmentierter wässriger Basislack eingesetzt wird, der als Bindemittel mindestens ein gesättigtes oder ungesättigtes Polyurethanharz enthält.

11. Verfahren nach mindestens einem der Ansprüche 9 und 10, **dadurch gekennzeichnet dass** in Stufe (1) ein pigmentierter wässriger Basislack eingesetzt wird, der mindestens ein Vernetzungsmittel ausgewählt aus der Gruppe bestehend aus Aminoplastharzen und blockierten oder unblockierten Polyisocyanaten enthält.

12. Verfahren nach mindestens einem der Ansprüche 9 bis 11, **dadurch gekennzeichnet, dass** alle Reste R¹ bis R³ aus der Gruppe der aliphatischen Kohlenwasserstoffe ausgewählt werden.

13. Verfahren nach mindestens einem der Ansprüche 9 bis 11, **dadurch gekennzeichnet, dass** alle Reste R¹ bis R³ aus der Gruppe der aromatischen Kohlenwasserstoffe ausgewählt werden.

14. Pigmentierter wässriger Basislack, **dadurch gekennzeichnet, dass** der Basislack mindestens ein Phosphinoxid der folgenden Strukturformel (I) enthält: 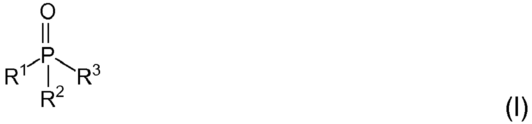 wobei die Reste R¹ bis R³ ausgewählt sind aus der Gruppe der aliphatischen oder aromatischen Kohlenwasserstoffe und zudem die Summe über die gewichtsprozentualen Anteile aller Phosphinoxide gemäß Strukturformel (I) 0,1 bis 5 Gew.-% bezogen auf das Gesamtgewicht des Basislacks beträgt.

15. Verwendung von mindestens einem Phosphinoxid in pigmentierten wässrigen Basislacken zur Haftungsverbesserung, **dadurch gekennzeichnet, dass** der besagte Basislack mindestens ein Phosphinoxid der folgenden Strukturformel (I) enthält: 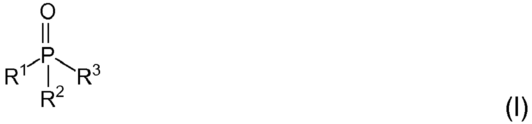 wobei die Reste R¹ bis R³ ausgewählt sind aus der Gruppe der aliphatischen oder aromatischen Kohlenwasserstoffe und zudem die Summe über die gewichtsprozentualen Anteile aller Phosphinoxide gemäß Strukturformel (I) 0,1 bis 5 Gew.-% bezogen auf das Gesamtgewicht des Basislacks beträgt.

## Claims

1. Method for producing a multicoat color and/or effect paint system, by
(1) applying a pigmented aqueous basecoat material to a substrate,
(2) forming a polymer film from the coating material applied in stage (1),
(3) applying a clearcoat material to the resultant basecoat film, and subsequently
(4) curing the basecoat film together with the clearcoat film, **characterized in that** in stage (1) a pigmented aqueous basecoat material is used which comprises at least one phosphine oxide of the following structural formula (I) : 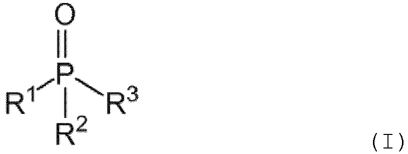 where the radicals R¹ to R³ are selected from the group of the aliphatic or aromatic hydrocarbons and, furthermore, the sum total of the weight percentage fractions of all of the phosphine oxides of structural formula (I) is 0.1% to 5% by weight, based on the total weight of the aqueous basecoat material applied in stage (1).

2. Method according to Claim 1, **characterized in that** the sum total of the weight percentage fractions of all of the phosphine oxides of structural formula (I) is 0.1% to 4.5% by weight, based on the total weight of the aqueous basecoat material applied in stage (1).

3. Method according to at least one of Claims 1 and 2, **characterized in that** in stage (1) a pigmented aqueous basecoat material is used which comprises as binder at least one saturated or unsaturated polyurethane resin.

4. Method according to at least one of Claims 1 to 3, **characterized in that** in stage (1) a pigmented aqueous basecoat material is used which comprises at least one crosslinking agent selected from the group consisting of amino resins and blocked or nonblocked polyisocyanates.

5. Method according to at least one of Claims 1 to 4, **characterized in that** all the radicals R¹ to R³ are selected from the group of the aliphatic hydrocarbons.

6. Method according to at least one of Claims 1 to 5, **characterized in that** a mixture of said phosphine oxides is used, the radicals R¹ to R³ being a C₃ to C₁₆ alkyl radical and there being precisely two different kinds of radicals present, R and R', and so said mixture comprises the species R₃P(O), R₂R'P(O), RR'₂P(O) and R'₃P(O).

7. Method according to at least one of Claims 1 to 4, **characterized in that** all the radicals R¹ to R³ are selected from the group of the aromatic hydrocarbons.

8. Multicoat color and/or effect paint system producible by the method according to Claims 1 to 7.

9. Method for repairing defects on the multicoat color and/or effect paint system according to Claim 8, by
(1) applying a pigmented aqueous basecoat material to the defect,
(2) forming a polymer film from the coating material applied in stage (1),
(3) applying a clearcoat material to the resultant basecoat film and subsequently
(4) curing the basecoat film together with the clearcoat film,
**characterized in that** in stage (1) a pigmented aqueous basecoat material is used which comprises at least one phosphine oxide of the following structural formula (I) : 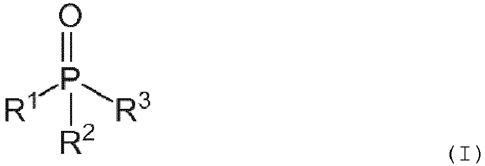 where the radicals R¹ to R³ are selected from the group of the aliphatic or aromatic hydrocarbons and, furthermore, the sum total of the weight percentage fractions of all of the phosphine oxides of structural formula (I) is 0.1% to 5% by weight, based on the total weight of the aqueous basecoat material applied in stage (1).

10. Method according to Claim 9, **characterized in that** in stage (1) a pigmented aqueous basecoat material is used which comprises as binder at least one saturated or unsaturated polyurethane resin.

11. Method according to at least one of Claims 9 and 10, **characterized in that** in stage (1) a pigmented aqueous basecoat material is used which comprises at least one crosslinking agent selected from the group consisting of amino resins and blocked or nonblocked polyisocyanates.

12. Method according to at least one of Claims 9 to 11, **characterized in that** all the radicals R¹ to R³ are selected from the group of the aliphatic hydrocarbons.

13. Method according to at least one of Claims 9 to 11, **characterized in that** all the radicals R¹ to R³ are selected from the group of the aromatic hydrocarbons.

14. Pigmented aqueous basecoat material **characterized in that** the basecoat material comprises at least one phosphine oxide of the following structural formula (I) : 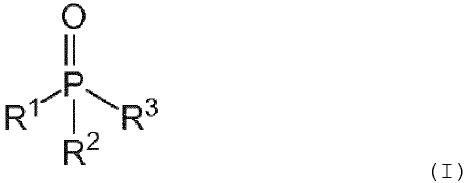 where the radicals R¹ to R³ are selected from the group of the aliphatic or aromatic hydrocarbons and, furthermore, the sum total of the weight percentage fractions of all of the phosphine oxides of structural formula (I) is 0.1% to 5% by weight, based on the total weight of the basecoat material.

15. Use of at least one phosphine oxide in pigmented aqueous basecoat materials for improving adhesion, **characterized in that** the said basecoat material comprises at least one phosphine oxide of the following structural formula (I): 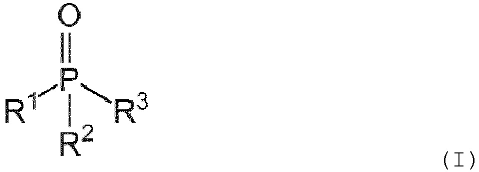 where the radicals R¹ to R³ are selected from the group of the aliphatic or aromatic hydrocarbons and, furthermore, the sum total of the weight percentage fractions of all of the phosphine oxides of structural formula (I) is 0.1% to 5% by weight, based on the total weight of the basecoat material.

## Revendications

1. Procédé de fabrication d'un vernissage multicouche colorant et/ou à effet, selon lequel
(1) un vernis de base aqueux pigmenté est appliqué sur un substrat,
(2) un film polymère est formé à partir du vernis appliqué à l'étape (1),
(3) un vernis transparent est appliqué sur la couche de vernis de base ainsi obtenue, puis
(4) la couche de vernis de base est durcie conjointement avec la couche de vernis transparent, **caractérisé en ce qu'**à l'étape (1), un vernis de base aqueux pigmenté est utilisé, qui contient au moins un oxyde de phosphine de la formule structurale (I) suivante : 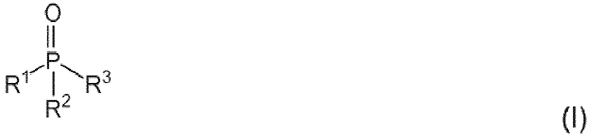 dans laquelle les radicaux R¹ à R³ sont choisis dans le groupe des hydrocarbures aliphatiques ou aromatiques, et, par ailleurs, la somme des proportions en pourcentage en poids de tous les oxydes de phosphine selon la formule structurale (I) est de 0,1 à 5 % en poids par rapport au poids total du vernis de base aqueux appliqué à l'étape (1).

2. Procédé selon la revendication 1, **caractérisé en ce que** la somme des proportions en pourcentage en poids de tous les oxydes de phosphine selon la formule structurale (I) est de 0,1 à 4,5 % en poids par rapport au poids total du vernis de base aqueux appliqué à l'étape (1).

3. Procédé selon au moins l'une quelconque des revendications 1 et 2, **caractérisé en ce qu'**à l'étape (1), un vernis de base aqueux pigmenté est utilisé, qui contient en tant que liant au moins une résine de polyuréthane saturée ou insaturée.

4. Procédé selon au moins l'une quelconque des revendications 1 à 3, **caractérisé en ce qu'**à l'étape (1), un vernis de base aqueux pigmenté est utilisé, qui contient au moins un agent de réticulation choisi dans le groupe constitué par les résines aminoplaste et les polyisocyanates bloqués ou non bloqués.

5. Procédé selon au moins l'une quelconque des revendications 1 à 4, **caractérisé en ce que** tous les radicaux R¹ à R³ sont choisis dans le groupe des hydrocarbures aliphatiques.

6. Procédé selon au moins l'une quelconque des revendications 1 à 5, **caractérisé en ce qu'**un mélange desdits oxydes de phosphine est utilisé, les radicaux R¹ à R³ étant un radical alkyle en C₃ à C₁₆ et exactement deux types différents de radicaux, R et R', étant présents, de sorte que ledit mélange contienne les espèces R₃P(O), R₂R'P(O), RR'₂P(O) et R'₃P(O).

7. Procédé selon au moins l'une quelconque des revendications 1 à 4, **caractérisé en ce que** tous les radicaux R¹ à R³ sont choisis dans le groupe des hydrocarbures aromatiques.

8. Vernissage multicouche colorant et/ou à effet, pouvant être fabriqué par le procédé selon les revendications 1 à 7.

9. Procédé de retouche de défauts sur le vernissage multicouche colorant et/ou à effet selon la revendication 8, selon lequel
(1) un vernis de base aqueux pigmenté est appliqué sur le défaut,
(2) un film polymère est formé à partir du vernis appliqué à l'étape (1),
(3) un vernis transparent est appliqué sur la couche de vernis de base ainsi obtenue, puis
(4) la couche de vernis de base est durcie conjointement avec la couche de vernis transparent, **caractérisé en ce qu'**à l'étape (1), un vernis de base aqueux pigmenté est utilisé, qui contient au moins un oxyde de phosphine de la formule structurale (I) suivante : 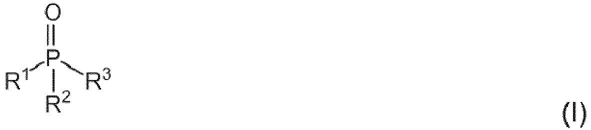 dans laquelle les radicaux R¹ à R³ sont choisis dans le groupe des hydrocarbures aliphatiques ou aromatiques, et, par ailleurs, la somme des proportions en pourcentage en poids de tous les oxydes de phosphine selon la formule structurale (I) est de 0,1 à 5 % en poids par rapport au poids total du vernis de base aqueux appliqué à l'étape (1).

10. Procédé selon la revendication 9, **caractérisé en ce qu'**à l'étape (1), un vernis de base aqueux pigmenté est utilisé, qui contient en tant que liant au moins une résine de polyuréthane saturée ou insaturée.

11. Procédé selon au moins l'une quelconque des revendications 9 et 10, **caractérisé en ce qu'**à l'étape (1), un vernis de base aqueux pigmenté est utilisé, qui contient au moins un agent de réticulation choisi dans le groupe constitué par les résines aminoplaste et les polyisocyanates bloqués ou non bloqués.

12. Procédé selon au moins l'une quelconque des revendications 9 à 11, **caractérisé en ce que** tous les radicaux R¹ à R³ sont choisis dans le groupe des hydrocarbures aliphatiques.

13. Procédé selon au moins l'une quelconque des revendications 9 à 11, **caractérisé en ce que** tous les radicaux R¹ à R³ sont choisis dans le groupe des hydrocarbures aromatiques.

14. Vernis de base aqueux pigmenté, **caractérisé en ce que** le vernis de base contient au moins un oxyde de phosphine de la formule structurale (I) suivante : 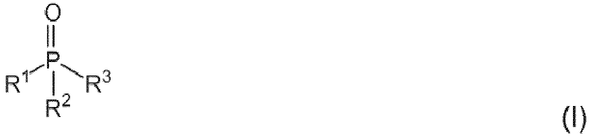 dans laquelle les radicaux R¹ à R³ sont choisis dans le groupe des hydrocarbures aliphatiques ou aromatiques, et, par ailleurs, la somme des proportions en pourcentage en poids de tous les oxydes de phosphine selon la formule structurale (I) est de 0,1 à 5 % en poids par rapport au poids total du vernis de base.

15. Utilisation d'au moins un oxyde de phosphine dans des vernis de base aqueux pigmentés pour améliorer l'adhésion, **caractérisée en ce que** ledit vernis de base contient au moins un oxyde de phosphine de la formule structurale (I) suivante : 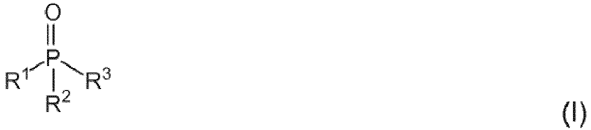 dans laquelle les radicaux R¹ à R³ sont choisis dans le groupe des hydrocarbures aliphatiques ou aromatiques, et, par ailleurs, la somme des proportions en pourcentage en poids de tous les oxydes de phosphine selon la formule structurale (I) est de 0,1 à 5 % en poids par rapport au poids total du vernis de base.
